# EUROPEAN PATENT APPLICATION

(11) **EP 4 382 376 A1**
(43) Date of publication of application: **12.06.2024**
(21) Application number: 23212688.8
(22) Date of filing: 28.11.2023
(51) Int. Cl.: B60T 13/74, F16D 65/18, F16H 1/28

(54) **A BEARING FIXING STRUCTURE FOR AN ACTUATOR**

(30) Priority: 06.12.2022 KR 20220168446
(71) Applicant: Keyang Electric Machinery Co., Ltd., Seoul 06178 (KR)
(72) Inventor: JANG, Soogil, Ansan-si, Gyeonggi-do 15611 (KR); LEE, Hogun, Ansan-si, Gyeonggi-do 15611 (KR); PARK, Kiseong, Ansan-si, Gyeonggi-do 15611 (KR)
(74) Representative: Zimmermann, Tankred Klaus

(57) **Abstract**

The present disclosure relates to a bearing fixing structure for an actuator, in which bearing fusion ribs (50) supporting both sides of a bearing (46) are melted by a laser irradiation and fused and fixed to an outer circumferential surface of the bearing (46), thereby achieving complete retention of the bearing (46).

## Description

### CROSS REFERENCE TO RELATED APPLICATION

The present application claims priority to Korean Patent Application No. 10-2022-0168446, filed December 06, 2022, the entire contents of which is incorporated herein for all purposes by this reference.

### BACKGROUND OF THE DISCLOSURE

### Technical Field

The present disclosure relates to a bearing fixing structure for an actuator, in which bearing fusion ribs supporting both sides of a bearing are melted by a laser irradiation and fused and fixed to an outer circumferential surface of the bearing, thereby achieving complete retention of the bearing.

### Background Art

Generally, an electronic actuator of a vehicle is intended to operate a friction pad installed on a caliper of a disc brake device during parking. An electronic parking brake operates automatically by a user's switch operation, and for this purpose it consists of an electronic parking brake motor and a gear assembly (power transmission device) to transmit the power of the motor.

In this type of electronic parking brake, when the driver presses a parking brake switch, a rotational force of an actuator's motor is transmitted to the caliper's input shaft through the gear assembly (power transmission device) such as a decelerator. When the input shaft receiving power rotates, a pressurized connection sleeve moves forward, and a piston and a caliper housing accommodating the connection sleeve move toward each other as the connection sleeve advances. In addition, two friction pads mounted on the piston and caliper housing hold both sides of a disc against rotation to ensure parking.

A conventional electronic parking brake actuator assembly is disclosed in Korean Patent Publication No. 10-2020-0029587.

In a conventional actuator for a braking device, a worm gear is installed in a direction orthogonal to a motor shaft, and bearings and bushes (holders) are combined at both ends of the worm gear to be rotatable inside the housing.

The bearings and bushes (holders) of these brake actuators may be installed and fixed in mounting grooves formed on a cover and a housing.

However, as the bearing and bush (holder) are simply fixed in the mounting groove, the shaking of the bearing or bush (holder) may cause abnormal operation and failure of the actuator when vibration or shock occurs.

In addition, the bearing or bush may be fixed to the mounting groove by applying an ultrasonic fusion method to prevent shaking of these bearings and bushes. However, in the case of the ultrasonic fusion method of these bearings or bushes, there is a problem that vibration may cause subtle distortion of the shaft (warm gear) or surface damage due to stress generation in the cover part.

### Documents of Related Art

(Patent Document) Korean Patent Publication No. 10-2020-0029587

### Disclosure

### Technical Problem

The object of the present disclosure is to solve the problems of the prior art as described above. In a bearing fixing structure of an actuator according to the present disclosure, as bearing fusion ribs, which support both sides of a bearing, are melted by a laser irradiation and fused and fixed to an outer circumferential surface of the bearing, complete retention of the bearing may be achieved.

### Technical Solution

According to the characteristics of the present disclosure for achieving the above-described object, a bearing fixing structure of an actuator according to the present disclosure comprises: a housing provided with a motor receiving part for accommodating a motor and a gear mounting part on which a reduction gear unit is mounted; a cover coupled to an open upper portion of the housing to close the upper portion of the housing; a worm gear installed inside the gear mounting part and installed in a direction orthogonal to a motor shaft to transmit rotational power of the motor shaft; a bearing installed on each side of the worm gear and rotatably supporting the worm gear; a bearing insertion groove recessed in an arc shape inside the cover, to which a portion of the bearing is fixedly coupled; a bearing fusion rib that protrudes by a predetermined height on both sides of the bearing insertion groove and supports both sides of an outer circumferential surface of the bearing. The bearing fusion rib is melted by laser irradiation during the assembly process of the housing and the cover and is fused and fixed to the outer circumferential surface of the bearing.

The lower surface of the cover is further provided with a fusion guide surface which is inclined at a predetermined angle at a position corresponding to the bearing fusion rib. When the cover is irradiated with a laser, in the process of assembling the housing and the cover, the bearing fusion rib is guided to be fused to the outer circumferential surface of the bearing by the fusion guide surface.

The fusion guide surface is formed to be inclined downward the inner direction to the outer direction of the bearing.

The upper surface of the cover is further provided with a laser guide groove which is recessed by a predetermined depth at a position corresponding to the bearing fusion rib and guides a laser toward the bearing fusion rib

The bearing fusion rib is characterized in that the end is formed to be inclined downward from the inner direction to the outer direction of the bearing.

### Advantageous Effects

A bearing fixing structure of an actuator according to the present disclosure has the following effects.

As the bearing fusion ribs supporting both sides of the bearing are melted by a laser irradiation, and fused and fixed to the bearing, complete retention of the bearing may be achieved and there is an advantage of minimizing malfunction and failure of the actuator due to the bearing vibration.

Additionally, fusion guide surfaces are formed on both sides of a bearing mounting groove. During the process of assembling a housing and a cover and fixing them by laser fusion, the fusion guide surface guides the melted bearing fusion ribs to the outer circumferential surface of the bearing, so that the bearing fusion ribs may be firmly fused to the outer circumferential surface of the bearing.

In addition, the laser guide groove is formed on the upper surface of the cover, so when a laser is irradiated on the cover, the laser may be irradiated to a location adjacent to the bearing fusion rib, allowing the bearing fusion rib to be melted more smoothly.

### Description of Drawings

FIG. 1 is a perspective view showing the configuration of a preferred embodiment of an actuator according to the present disclosure.
FIG. 2 is a perspective view showing an open state of a cover of the actuator according to the present disclosure.
FIG. 3 is an enlarged perspective view showing the configuration of a bearing mounting groove and a fusion guide surface formed on a lower surface of the cover constituting the embodiment of the present disclosure.
FIG. 4 is an enlarged perspective view showing a state in which bearing fusion ribs are formed on both sides of a bearing insertion groove constituting the embodiment of the present disclosure.
FIG. 5 is an enlarged perspective view showing a state before the bearing fusion rib is fused to an outer circumferential surface of the bearing by laser irradiation constituting the embodiment of the present disclosure.
FIG. 6 is an enlarged cross-sectional view perspective view showing a state before the bearing fusion rib is fused to an outer circumferential surface of the bearing by laser irradiation constituting the embodiment of the present disclosure.
FIG. 7 is an enlarged cross-sectional view showing a state in which the bearing fusion rib is fused to an outer circumferential surface of the bearing by laser irradiation constituting the embodiment of the present disclosure.

### DETAILED DESCRIPTION OF THE DISCLOSURE

Hereinafter, a preferred embodiment of a bearing fixing structure of an actuator according to the present disclosure will be described in detail with reference to the attached drawings.

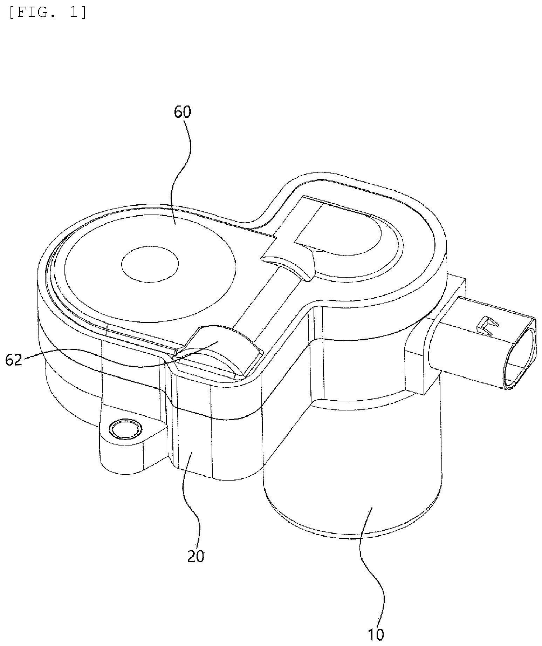

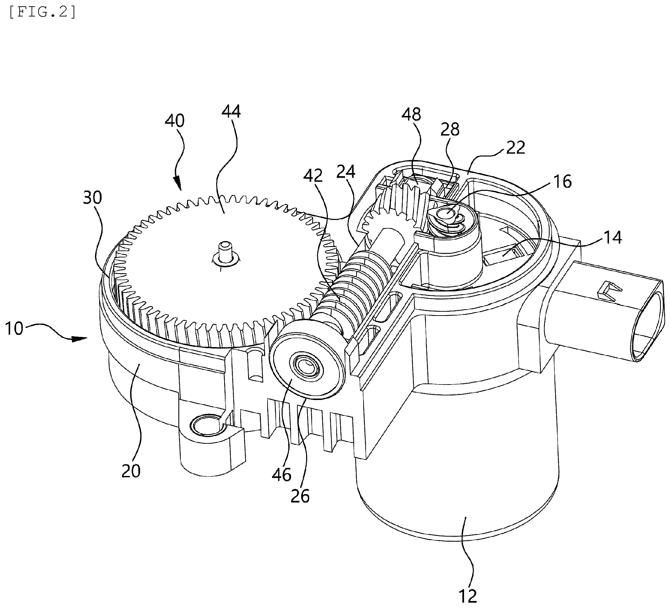

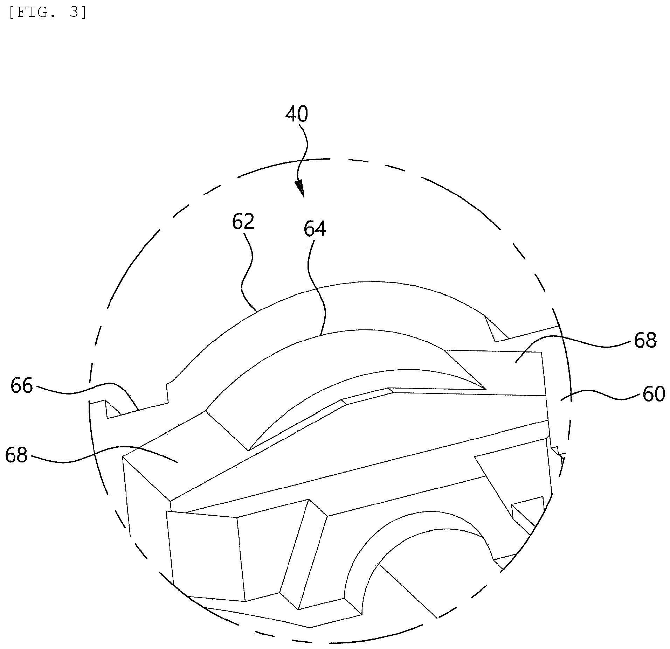

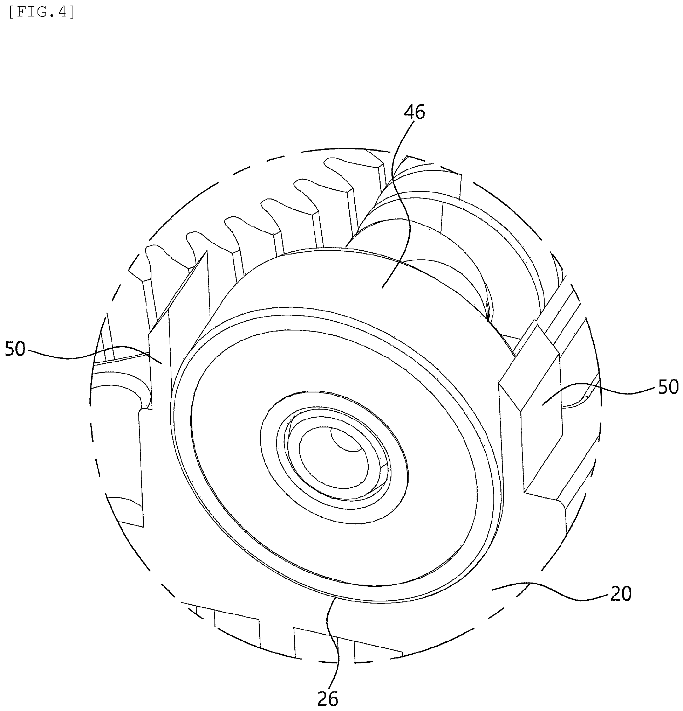

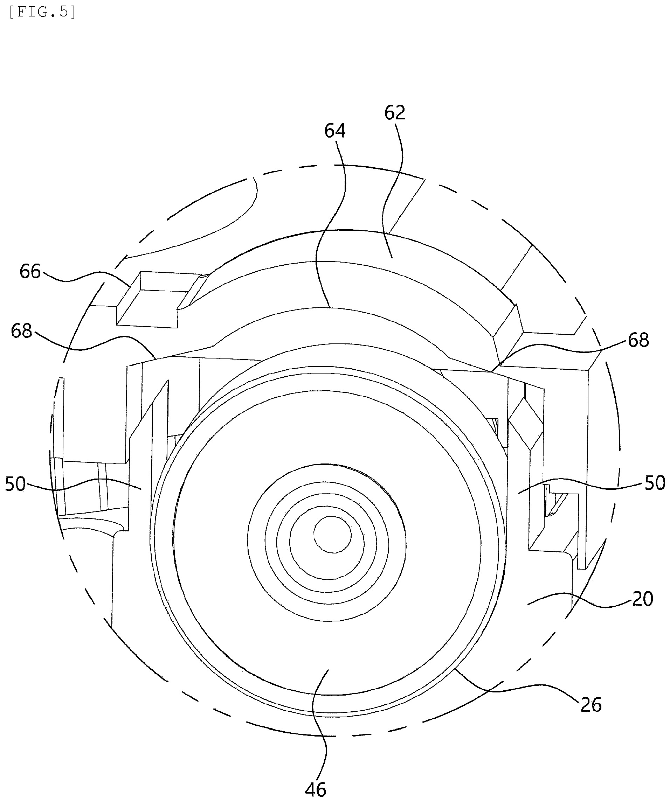

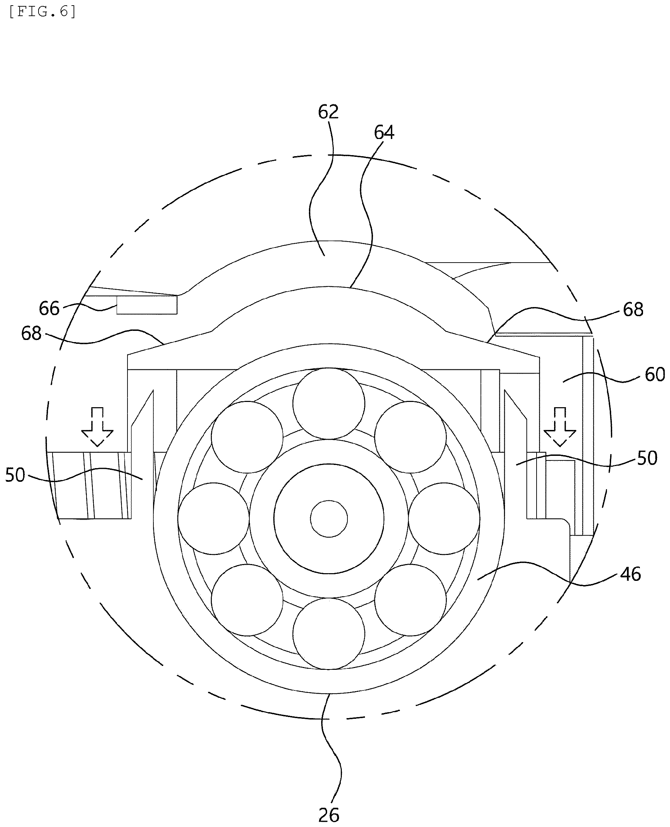

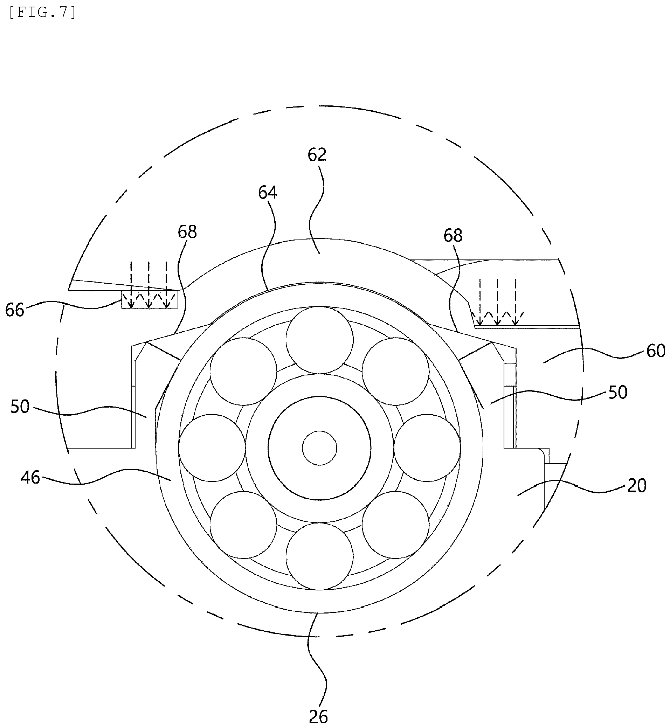

FIG. 1 is a perspective view showing the configuration of a preferred embodiment of an actuator according to the present disclosure, FIG. 2 is a perspective view showing an open state of a cover of the actuator according to the present disclosure, FIG. 3 is an enlarged perspective view showing the configuration of a bearing mounting groove and a fusion guide surface formed on a lower surface of the cover constituting the embodiment of the present disclosure, FIG. 4 is an enlarged perspective view showing a state in which bearing fusion ribs are formed on both sides of a bearing insertion groove constituting the embodiment of the present disclosure, FIG. 5 is an enlarged perspective view showing a state before the bearing fusion rib is fused to the outer circumferential surface of the bearing by laser irradiation constituting the embodiment of the present disclosure, FIG. 6 is an enlarged cross-sectional view perspective view showing a state before the bearing fusion rib is fused to the outer circumferential surface of the bearing by laser irradiation constituting the embodiment of the present disclosure, and FIG. 7 is an enlarged cross-sectional view showing a state in which the bearing fusion rib is fused to the outer circumferential surface of the bearing by laser irradiation constituting the embodiment of the present disclosure.

As shown in the drawings, a bearing fixing structure of an actuator according to the present disclosure is characterized by including: a housing 10 provided with a motor receiving part 12 accommodating a motor 14 and a gear mounting part 20 on which a reduction gear unit 40 is mounted; a cover 50 coupled to an open upper portion of the housing 10 to close the upper portion of the housing 10; a worm gear 42 installed inside the gear mounting part 20 and installed in a direction orthogonal to a motor shaft 16 to transmit rotational power of the motor shaft 16; a bearing 46 installed on each side of the worm gear 42 and rotatably supporting the worm gear 42; a bearing insertion groove 54 recessed in an arc shape inside the cover 50, to which a portion of the bearing 46 is fixedly coupled; and a bearing fusion rib 50 that protrudes by a predetermined height on both sides of the bearing insertion groove 26 and supports both sides of an outer circumferential surface of the bearing 46. The bearing fusion rib 50 is characterized by being melted by laser irradiation during the assembly process of the housing 10 and the cover 60 and being fused and fixed to the outer circumferential surface of the bearing 46.

The actuator according to the present disclosure generates a large rotational force by decelerating the driving of a motor and transmits it to the outside to function as an electronic brake. For this purpose, a reduction gear unit 40 along with a motor 14 is installed inside the actuator of the present disclosure. The reduction gear unit 40 described below refers to an overall structure composed of a plurality of gears.

First, looking at FIGS. 1 and 2, the actuator forms an entire external structure by combining a housing 10 and a cover 50. Here, the housing 10 may be divided into a motor receiving part 12 and a gear mounting part 20. When the housing 10 and the cover 50 are combined, a motor 14 and a reduction gear unit 40 are all shielded, and only a connector (not shown) for power supply and a final output shaft (not shown) are exposed to the outside.

A motor 14 is installed inside the motor receiving part 12, and a motor shaft 16 is connected to the motor 14. The motor shaft 16 is rotated through the driving force of the motor 14, and extends in the longitudinal direction of the motor receiving part 12 with respect to FIG. 2. A first worm 18, which will be described later, is installed at the end of the motor shaft 16. The first worm 18 rotates together with the motor shaft 16 and transmits the driving force of the motor 14 to a worm gear 42, which will be described later. As shown in FIG. 2, the first worm 18 is exposed to the outside only when a cover 50, which will be described later, is removed.

A gear mounting part 20 is formed on the upper part of the motor receiving part 12. The gear mounting part 20 is coupled to the upper part of the motor receiving part 12 and extends in the lateral direction of the motor receiving part 12. A reduction gear unit 40, which will be described later, is accommodated in a portion extending in the lateral direction of the motor receiving part 12. The gear mounting part 20 may be assembled separately from the motor receiving part 12, or may be made integral with both.

A receiving part 22 is formed on the upper surface of the gear mounting part 20. The receiving part 22 is an open portion on the upper surface of the gear mounting part 20 and is also a portion shielded by the cover 50. A reduction gear unit 40, which will be described later, is installed in the receiving part 22. For this purpose, the receiving part 22 has a first installation part 24 into which a worm gear 42, which will be described later, is installed, and a second installation part 30, into which a drive gear 44, which will be described later, is inserted. This will be explained again below.

The first installation part 24 is formed in the receiving part 22. The first installation part 24 is a portion in which a worm gear 42 is seated among the reduction gear units 40, which will be described later. The first installation part 24 extends longitudinally in one direction and is recessed by a predetermined depth in an arc shape. Inside the first installation part 24, the worm gear 42, which will be described later, is inserted and rotatably mounted as shown in FIG. 2.

Bearing insertion grooves 26 and bush insertion grooves 28 are formed at both ends of the first installation part 24.

As shown in FIG. 2, the bearing insertion groove 26 and the bush insertion groove 28 are recessed by a predetermined depth in a semicircular shape. Inside the bearing insertion groove 26 and the bush insertion groove 28, a portion of the bearing 46 and the bush 48, which will be described later, are vertically inserted and fixed.

A second receiving part 22 is formed on the left side of the first receiving part 22. The second receiving part 22 is formed to be recessed in a circular shape surrounding a drive gear 44, which will be described later. The drive gear 44 is inserted into the second installation part 30. Inside the second installation part 30, the drive gear 44, which will be described later, is rotatably installed.

A reduction gear unit 40 is installed inside the first receiving part 22 and the second receiving part 22. The reduction gear unit 40 largely consists of a worm gear 42 and a drive gear 44.

The worm gear 42 is a general worm gear, and detailed description will be omitted. The worm gear 42 is installed long forward and backward direction inside the first receiving part 22. One side of the worm gear 42 is gear-coupled to a first worm 18 of the motor shaft 16, and the other side of the worm gear 42 is gear-coupled to a drive gear 44, which will be described later. The worm gear 42 is rotatably installed inside the first receiving part 22 and serves to transmit the rotational power of the motor shaft 16 to the drive gear 44, which will be described later.

In addition, the worm gear 42 is installed in a direction orthogonal to the motor shaft 16 to reduce and transmit the drive of the motor 14, but also serves to transmit the drive by changing the direction.

A drive gear 44 is installed inside the second receiving part 22. The drive gear 44 is a general spur gear, and detailed description will be omitted. The drive gear 44 is gear-coupled to the worm gear 42 and is rotatably installed in the second receiving part 22 to transmit the reduced rotational power to the outside.

Bearings 46 and bushes 48 are installed on each side of the worm gear 42. The bearing 46 is a general bearing and detailed description will be omitted. The bearing 46 is installed inside the bearing insertion groove 26 as shown in FIG. 2 and serves to rotatably support the worm gear 42.

The bush 48 is installed on the opposite side of the bearing 46. The bush 48 is a general bush and detailed description will be omitted. The bush 48 is fixedly coupled to the end of the worm gear 42 and is inserted into the bush insertion groove 28 to rotatably support the worm gear 42.

Bearing fusion ribs 50 are formed on both sides of the bearing insertion groove 26, respectively. As shown in FIG. 4, the bearing fusion ribs 50 are formed to protrude vertically by a predetermined height from the left and right upper surfaces of the bearing insertion groove 26. When the bearing 46 is mounted on the bearing insertion groove 26, the bearing fusion ribs 50 are placed on both outer circumferential surfaces of the bearing 46 to support both outer circumferential surfaces of the bearing 46.

The end of the bearing fusion rib 50 is formed to be inclined downward by a predetermined angle from an inner direction to an outer direction of the bearing 46 with respect to the bearing 46. As the end of the bearing fusion rib 50 is formed to be inclined downward, when the bearing fusion rib 50 is melted by laser irradiation and fused to the outer circumferential surface of the bearing, the bearing fusion rib 50 may be in close contact with the outer circumferential surface of the bearing 46 by a fusion guide surface 68, which will be described later.

A cover 60 is installed on the upper side of the housing 10. The cover 60 is installed to cover the upper opening of the housing 10. The cover 60 is coupled and fixed to the upper end of the motor receiving part 12 and the gear mounting part 20. The cover 60 serves to close the upper end of the housing so that the motor shaft 16 and the reduction gear unit 40 are not exposed to the outside.

A bearing mounting part 62 is protruding from one side of the upper surface of the cover 60. The bearing mounting part 62 has an arc shape and protrudes upward at a position corresponding to the bearing insertion groove 26. Inside the bearing mounting part 62, the upper part of the bearing 46 is inserted and fixed.

A bearing mounting groove 64 is formed inside the bearing mounting part 62. The bearing mounting groove 64 is recessed in a semicircular shape inside the bearing mounting part 62. Inside the bearing mounting groove 64, the upper end of the bearing 46 is inserted and fixed.

A laser guide groove 66 is formed at one side of the bearing mounting part 62. As shown in FIG. 5, the laser guide groove 66 is shaped like a square box and is recessed by a predetermined depth. The laser guide groove 66 is formed at a position corresponding to the bearing fusion rib 50 and guides a laser to the bearing fusion rib 50 when the laser is irradiated to the cover 60.

That is, the laser irradiated to the cover 60 by the laser guide groove 66 may be irradiated adjacent to the bearing fusion rib 50, so that the melting or degradation of the bearing fusion rib 50 may be made smoother.

Fusion guide surfaces 68 are formed on both sides of the bearing mounting groove 64. As shown in FIG. 3, the fusion guide surface 68 extends along both ends of the bearing mounting groove 64, and is formed to be inclined downward at a predetermined angle from the inside to the outside with respect to the bearing mounting groove 64.

The fusion guide surface 68 is located on the upper side of the bearing fusion rib 50. When the housing 10 and the cover 60 are assembled and laser fused, the bearing fusion rib 50 is pressed to guide the bearing fusion rib 50 to be fused to the outer circumferential surface of the bearing 26.

That is, the fusion guide surface 68 is formed to incline downward from the inside to the outside with respect to the bearing mounting groove 64. During assembly and laser fusion of the housing 10 and the cover 60, by guiding the melted bearing fusion rib 50 toward the bearing 26, the bearing 26 may be completely retained by fusion to the bearing fusion rib 50.

Hereinafter, referring to FIGS. 1 to 7, the process in which the bearing fusion rib 50 is fused to the outer peripheral surface of the bearing 26 during assembly and laser fusion of the housing 10 and the cover 60 will be described.

The motor 14 and the reduction gear unit 40 are mounted inside the housing 10. The bearings 46 and the bushes 48 are mounted on both ends of the worm gear 42 of the reduction gear unit 40, and the bearings 26 and bushes 48 are inserted into the bearing insertion groove 26 and the bush insertion groove 28, respectively.

The cover 60 is installed on the upper opening of the housing 10 in order to completely seal the inside of the actuator while the motor 14 and the reduction gear unit 40 are mounted inside the housing 10.

The assembly process of the housing 10 and the cover 60 is performed by assembling the cover 60 from the upper side to the lower side of the housing 10, with the cover 60 positioned on the upper surface of the housing 10.

When the cover 60 is assembled to the housing 10, the housing 10 and the cover 60 may be hermetically sealed by a laser fusion process.

In the process of assembling the cover 60 to the housing 10, the fusion guide surface 68 of the cover 60 presses the bearing fusion rib 50. At the same time, as the laser is irradiated to the cover 60, the bearing fusion rib 50, which supports both sides of the bearing 26, is degraded.

In addition, while the bearing fusion rib 50 is melted by laser irradiation, the bearing fusion rib 50 is fused to the outer peripheral surface of the bearing 26 along the fusion guide surface 68, thereby forming the bearing 26 to be completely retained by the bearing fusion rib 50.

According to the present disclosure, in the bearing fixing structure of the actuator, the bearing fusion ribs 50, which support both sides of the bearing, are melted by laser irradiation and fused and fixed to the bearing 26. Accordingly, the bearing 46 may be completely retained and the shaking of the bearing 46 may be minimized.

Additionally, fusion guide surfaces 68 are formed on both sides of the bearing mounting groove 64. During the process of assembling the housing 10 and the cover 60 and fixing them by laser fusion, the fusion guide surface 68 guides the melted bearing fusion ribs 50 to the outer circumferential surface of the bearing 46, so that the bearing fusion ribs 50 may be firmly fused to the outer circumferential surface of the bearing 46.

In addition, the laser guide groove 66 is formed on the upper surface of the cover 60, so when a laser is irradiated on the cover 60, the laser may be irradiated to a location adjacent to the bearing fusion rib 50, allowing the bearing fusion rib 50 to be melted more smoothly.

The scope of the present disclosure is not limited to the embodiments illustrated above, and many other modifications based on the present disclosure will be possible to those skilled in the art within the above technical scope.

### Reference Numerals in the Drawings

| | | | |
|---|---|---|---|
| 10 | housing | 12 | motor receiving part |
| 14 | motor | 16 | motor shaft |
| 18 | first worm | 22. | receiving part |
| 24. | first installation part | 26. | bearing insertion groove |
| 28. | bush insertion groove | 30. | second installation part |
| 40 | reduction gear unit | 42 | worm gear |
| 44. | drive gear | 46 | bearing |
| 48. | bush | 50 | bearing fusion rib |
| 60 | cover | 62. | bearing mounting part |
| 64 | bearing mounting groove | 66. | laser guide groove |
| 68 | fusion guide surface | | |

## Claims

1. A bearing fixing structure of an actuator comprising:
a housing (10) provided with a motor receiving part (12) accommodating a motor (14) and a gear mounting part (20) on which a reduction gear unit (40) is mounted;
a cover (60) coupled to an open upper portion of the housing (10) to close the upper portion of the housing (10);
a worm gear (42) installed inside the gear mounting part (20) and installed in a direction orthogonal to a motor shaft (16) to transmit rotational power of the motor shaft (16);
a bearing (46) installed on each side of the worm gear (42) and rotatably supporting the worm gear (42);
a bearing insertion groove (26) formed on one surface of the gear mounting part (20) by a predetermined depth, and into which a portion of the bearing (46) is inserted and fixed; and
a bearing fusion rib (50) protruding from both sides of the bearing insertion groove (26) by a predetermined height and supporting both sides of an outer circumferential surface of the bearing (46),
**characterized in that** the bearing fusion rib (50) is melted by laser irradiation during an assembly process of the housing (10) and the cover (60), and is fused and fixed to the outer circumferential surface of the bearing (46).

2. The bearing fixing structure of the actuator of claim 1, further comprising a fusion guide surface (68) provided on a lower surface of the cover (60), the fusion guide surface (68) being inclined at a predetermined angle at a position corresponding to the bearing fusion rib (50),
**characterized in that** when the cover (60) is irradiated with a laser, the fusion guide surface (68) guides the bearing fusion rib (50) to be fused to the outer circumferential surface of the bearing (46) in the process of assembling the housing (10) and the cover (60).

3. The bearing fixing structure of the actuator of claim 2, **characterized in that** the fusion guide surface (68) is formed to be inclined downward from the inner direction to the outer direction of the bearing (46).

4. The bearing fixing structure of the actuator of claim 3, further comprising a laser guide groove (66),
**characterized in that** the laser guide groove (66) is formed to be recessed to a predetermined depth on the upper surface of the cover (60) at a position corresponding to the bearing fusion rib (50), and guides the laser toward the bearing fusion rib (50).

5. The bearing fixing structure of the actuator of claim 3, **characterized in that** the bearing fusion rib (50) has an end formed to be inclined downward from the inner direction to the outer direction of the bearing (46).
